Europäisches Patentamt

European Patent Office

Office européen des brevets

(19)

(11) Numéro de publication : **0 450 993 B1**

## (12) FASCICULE DE BREVET EUROPEEN

(45) Date de publication du fascicule du brevet :
01.06.94 Bulletin 94/22

(51) Int. Cl.⁵ : **G01P 9/04**

(21) Numéro de dépôt : **91400443.7**

(22) Date de dépôt : **19.02.91**

(54) Procédé et dispositif pour déterminer la vitesse de rotation d'un mobile autour d'un axe et applications du dispositif comme gyromètre ou accéléromètre.

(30) Priorité : **19.02.90 FR 9001950**

(43) Date de publication de la demande :
**09.10.91 Bulletin 91/41**

(45) Mention de la délivrance du brevet :
**01.06.94 Bulletin 94/22**

(84) Etats contractants désignés :
**DE ES GB IT**

(56) Documents cités :
**EP-A- 0 307 321**
**GB-A- 2 113 842**
**US-A- 3 206 985**

(73) Titulaire : **SOCIETE DE FABRICATION
D'INSTRUMENTS DE MESURE (S.F.I.M.)
13, avenue Marcel Ramolfo-Garnier
F-91344 Massy Cédex (FR)**

(72) Inventeur : **Charcosset, Claude
Le Mane Rainville
F-56780 Ile Aux Moines (FR)**

(74) Mandataire : **Schrimpf, Robert et al
Cabinet Regimbeau
26, Avenue Kléber
F-75116 Paris (FR)**

## Description

L'invention concerne un procédé et un dispositif pour déterminer la vitesse de rotation d'un mobile autour d'un axe et l'application du dispositif comme gyromètre ou accéléromètre.

Il est connu d'utiliser l'effet piezoélectrique pour déterminer la vitesse de rotation d'un mobile autour d'un axe, en fixant à ce mobile un ensemble comprenant une couronne reliée à un noyau central par une pluralité de bras radiaux comportant des lames piezoélectriques et en utilisant l'effet piezoélectrique pour induire une vibration dans ledit ensemble et pour recueillir une tension représentative de la vitesse de rotation du mobile (publication GB-A-2 113 842).

Dans cette technique connue, les lames travaillent pour l'essentiel en flexion, ce qui constitue des conditions d'emploi très médiocres.

La présente invention vise à faire travailler les lames pour l'essentiel en traction-compression simple, ce qui les place dans des conditions optimales pour l'exploitation du phénomène piezoélectrique.

On y parvient, selon l'invention, par un procédé dans lequel on fixe ledit ensemble audit mobile par l'intermédiaire de la couronne, on utilise comme bras des lames en matériau piezoélectrique dont les grandes faces sont métallisées et qui sont disposées en sorte que leurs plans moyens s'intersectent sur ledit axe, on utilise ces faces métallisées pour appliquer une tension électrique afin d'induire une vibration de translation dans le noyau central ou pour recueillir une tension électrique produite par une vibration induite dans la lame par la rotation du mobile.

Un dispositif conforme à l'invention comporte au moins un bras constitué par une lame (dite réceptrice) en matériau piezoélectrique et au moins deux autres bras constitués chacun par une lame (dite motrice) en matériau piezoélectrique, ces trois lames ayant leurs grandes faces métallisées et étant disposées en sorte que leurs plans moyens se coupent sur ledit axe, des moyens étant prévus pour appliquer aux faces métallisées des lames motrices des tensions électriques de façon à induire, par effet piezoélectrique, une vibration de translation dans le noyau et des moyens étant prévus pour recueillir la tension électrique produite par effet piezoélectrique sur les grandes faces métallisées de la lame réceptrice par la vibration induite dans cette lame par la rotation du mobile.

Dans des modes de réalisation préférés, ce dispositif comporte encore une ou plusieurs des caractéristiques suivantes :

- les lames motrices sont identiques, la lame réceptrice étant identique aux lames motrices ou différente ;
- la dimension des lames parallèlement au dit axe est au moins deux fois la dimension des lames dans la direction de la couronne.
- la lame réceptrice est disposée en sorte que son plan moyen se trouve dans le plan bissecteur du dièdre formé par les plans moyens de deux lames motrices ;
- ledit dièdre forme un angle compris entre 40 et 140° ;
- le matériau piézoélectrique est du quartz et l'angle du dièdre est de 120°, les trois lames étant perpendiculaires à chacun des trois axes électriques du quartz ;
- des moyens sont prévus pour appliquer aux grandes faces des lames motrices des tensions sinusoïdales de signes opposés mais de même fréquence ;
- des moyens sont prévus pour introduire une différence de tension entre les tensions appliquées aux lames motrices ;
- le noyau est de forme cylindrique ;
- la couronne, le noyau et les lames sont faites d'un même matériau piézoélectrique ;
- la couronne, le noyau et les lames sont obtenus par façonnage d'une même masse en matériau piézoélectrique ;
- la couronne est fixée à un boîtier solidaire du mobile ;
- la couronne est frettée dans le boîtier ;
- le matériau du boîtier a le même coefficient de dilatation thermique que le matériau piézoélectrique ;
- le boîtier est rempli d'un gaz plus ou moins lourd que l'air ;
- les faces supérieure et inférieure du noyau sont partiellement métallisées et sont en présence d'un champ magnétique réglable, notamment grâce à un aimant permanent plus ou moins voisin de ces faces métallisées.

L'invention sera encore expliquée ci-après en référence aux figures du dessin joint sur lequel :
- la figure 1 est un schéma de principe de l'élément essentiel d'un gyromètre piézo-électrique à trois lames conforme à l'invention ;
- la figure 2 est un schéma de réalisation de cet élément, en vue de dessus ;
- la figure 3 est une coupe de l'élément de la figure 2 par le plan bb de la figure 2, et
- la figure 4 est un schéma simplifié du circuit d'alimentation électrique de l'élément.

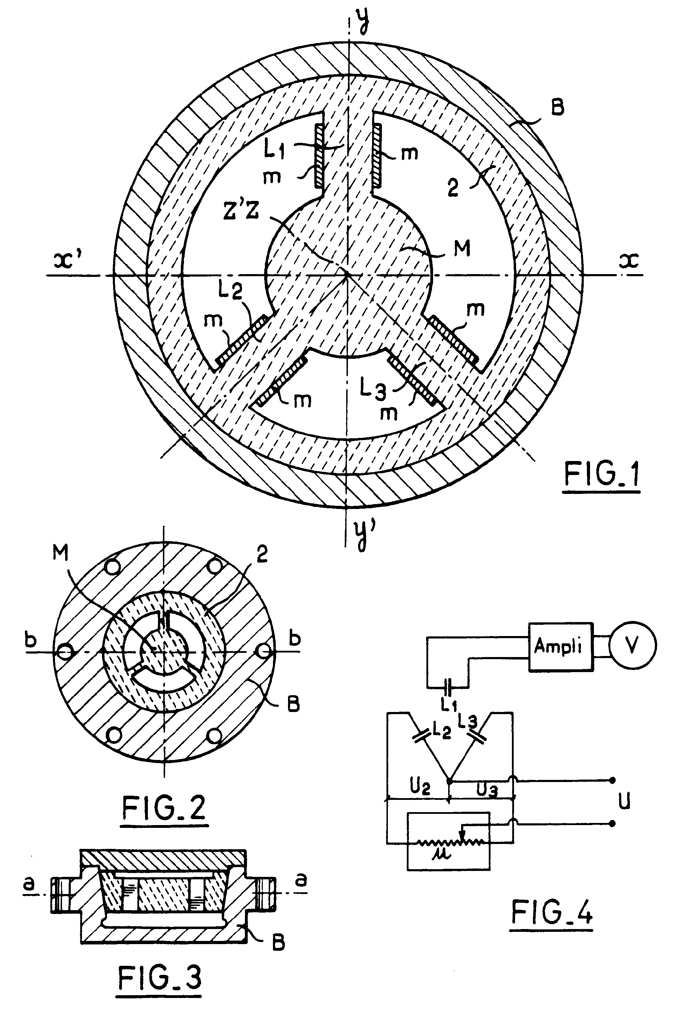

L'élément essentiel du gyromètre représenté sur les figures 1 à 3 est une pièce monolithique de céramique piézoélectrique frettée dans un boîtier métallique de même coefficient de dilatation thermique que la céramique.

Cette céramique comprend :

a) un noyau central 1 de masse M ;

b) une couronne extérieure 2 frettée dans le boîtier B;

c) trois lames radiales $L_1$, $L_2$, $L_3$ liant noyau et couronne et dont les grandes faces sont métallisées (métallisation schématisée en m).

Les plans moyens des trois lames s'intersectent selon un axe z'z qui est l'axe de rotation du gyromètre et qui est perpendiculaire aux directions x'x et y'y représentées sur la figure 1.

Seules les trois lames sont polarisées et sont piézoélectriques.

Fonctionnement du gyromètre idéal.-

Selon l'invention, les deux lames $L_2$ et $L_3$ (lames motrices) sont attaquées par des tensions U et -U sinusoïdales de fréquence identique à la fréquence propre de la masse M dans la direction y'y de la lame $L_1$.

Quand l'une de ces deux lames travaille en compression, l'autre est en extension, et il en résulte, dans la direction x'x une vibration dite primaire, perpendiculaire à la troisième lame $L_1$.

Sous l'effet d'une rotation $\Omega_z$ autour de l'axe z'z du gyromètre, une vibration secondaire apparaît dans la direction y'y ; cette vibration secondaire engendre aux bornes de la lame $L_1$ (lame réceptrice) une tension $U_1$ qui est la grandeur gyrométrique.

Le fonctionnement idéal est perturbé principalement par

a) la non identité des lames $L_2$ et $L_3$ due aux imperfections de la réalisation

b) la raideur finie dans la direction z, d'où il résulte une participation des composantes $\Omega_x$ et $\Omega_y$ à la vibration secondaire.

Selon l'invention, le premier défaut est combattu efficacement en excitant les lames $L_2$ et $L_3$ par des tensions $U_2 = U + u$, $U_3 = -U + u$ où u est une tension correctrice qui dépend principalement du couplage croisé entre les vibrations primaire et secondaire ; le réglage de cette tension en grandeur et phase est finement contrôlé par la tension $U_1$ aux bornes de la lame $L_1$ qui doit être nulle en l'absence de rotation d'entraînement. Le deuxième défaut est limité en donnant à la hauteur h des lames une plus grande valeur qu'à leur longueur 1.

Une autre disposition avantageuse consiste à donner à la lame $L_1$ une épaisseur supérieure à celle des lames $L_2$ et $L_3$, ce qui présente deux avantages (résolution améliorée et linéarité quasi parfaite) et un inconvénient (tension excitatrice notablement augmentée).

## Exemple.-

Les figures 2 et 3 illustrent un exemple de réalisation où couronne, lames et noyau forment un ensemble monolithique en céramique piézoélectrique $P_1$.69 de la société "Quartz et Silice".

Dimensions nominales caractéristiques :

**Lame $L_1$**    épaisseur : 0,4 mm     **Lames $L_2$ et $L_3$**    épaisseur : 0,67 mm

       hauteur : 8 mm                 hauteur : 8 mm

       longueur : 4 mm              longueur : 4 mm

**Noyau central**    hauteur : 8 mm

                    diamètre : 12 mm

**Précision de la réalisation** : 1/100e mm.

Pour ce gyromètre, le calcul permet de prévoir les caractéristiques de fonctionnement suivantes :

1) Fréquences :

Fréquence naturelle dans la direction de la lame $L_1$ : $f_y$ = 24,4 KHz

Fréquence naturelle dans la direction normale de la lame $L_1$ : $f_x$ = 0,8 $f_y$

Fréquence excitatrice : f = $f_y$.

2) Amplitude de la vibration primaire xo

xo = 0,4 $\mu$m pour une contrainte mécanique de 1 $^{dN/mm^2}$.

3) Résolution de la mesure gyrométrique

Avec un voltmètre de résolution 5 mV, une amplification de $10^4$ et une constante de temps de 0,01 s, la résolution gyrométrique est de 0,33 o/R (degré par heure)

Tensions excitatrices

$$U = 200V \text{ et } u = 30V$$

Défaut de linéarité
inférieur à un millième

**Revendications**

1. Procédé pour déterminer la vitesse de rotation d'un mobile autour d'un axe, dans lequel on fixe à ce mobile un ensemble comprenant une couronne reliée à un noyau central par une pluralité de bras radiaux comportant des lames piézoélectriques, et on utilise l'effet piézoélectrique pour induire une vibration dans ledit ensemble et pour recueillir une tension représentative de ladite vitesse de rotation, caractérisé en ce qu'on fixe ledit ensemble audit mobile par l'intermédiaire de la couronne, en ce qu'on utilise comme bras des lames en matériau piézoélectrique dont les grandes faces sont métallisées et qui sont disposées en sorte que leurs plans moyens s'intersectent sur ledit axe, et en ce qu'on utilise ces faces métallisées pour appliquer une tension électrique afin d'induire une vibration de translation dans le noyau central ou pour recueillir une tension électrique produite par une vibration induite dans la lame par la rotation du mobile.

2. Procédé selon la revendication 1, caractérisé en ce qu'on utilise au moins une lame ($L_1$) dite lame réceptrice et au moins deux lames ($L_2$,$L_3$) dites lames motrices, en ce qu'on applique des tensions électriques alternatives aux lames motrices pour les faire vibrer et en ce qu'on recueille sur la lame réceptrice une tension ($u_1$) proportionnelle à la vibration longitudinale de cette lame.

3. Procédé selon la revendication 2, caractérisé en ce qu'on utilise deux lames motrices disposées en sorte que leurs plans moyens forment un dièdre dans le plan bissecteur duquel se trouve le plan moyen de la lame réceptrice et on applique à ces deux lames motrices des tensions sinusoïdales (U,-U) de signes opposés mais de même fréquence.

4. Procédé selon la revendication 3, caractérisé en ce qu'on introduit une différence de tension (u) entre les tensions appliquées aux lames motrices pour obtenir une composante de vibration dirigée dans la direction de la lame réceptrice.

5. Procédé selon l'une des revendications 2 à 4, caractérisé en ce qu'on règle la fréquence de l'excitation électrique en sorte qu'elle soit aussi voisine que possible de la fréquence naturelle des vibrations dudit noyau (M) dans la direction de la lame réceptrice ($L_1$).

6. Dispositif pour déterminer la vitesse de rotation d'un mobile autour d'un axe, qui comprend un ensemble fixé au mobile et constitué par une couronne de révolution reliée à un noyau central par une pluralité de bras radiaux munis de lames piézoélectriques, des moyens pour faire vibrer ces lames par effet piézoélectrique et pour recueillir par effet piézoélectrique une tension due à une vibration induite dans les bras, caractérisé en ce que ladite couronne (2) est fixée au mobile (B) en sorte que ladite couronne soit axée parallèlement audit axe (z'z), en ce que ledit noyau (M) est placé dans la couronne en sorte que son centre de masse se trouve sur ledit axe, et en ce que le dispositif comprend au moins un bras constitué par une lame ($L_1$) (dite réceptrice) en matériau piézoélectrique et au moins deux autres bras constitués chacun par une lame ($L_2$,$L_3$) (dite motrice) en matériau piézoélectrique, ces trois lames ayant leurs grandes faces métallisées et étant disposées en sorte que leurs plans moyens se coupent sur ledit axe, des moyens étant prévus pour appliquer aux faces métallisées des lames motrices des tensions électriques de façon à induire, par effet piézoélectrique, une vibration de translation dans le noyau et des moyens étant prévus pour recueillir la tension électrique ($u_1$) produite par effet piézoélectrique sur les grandes faces métallisées de la lame réceptrice par la vibration induite dans cette lame par la rotation du mobile.

7. Dispositif selon la revendication 6, caractérisé en ce que les lames motrices ($L_2$,$L_3$) sont identiques, la lame réceptrice ($L_1$) étant identique aux lames motrices ou différente.

8. Dispositif selon la revendication 6 ou 7, caractérisé en ce que la dimension (h) des lames parallèlement audit axe est au moins deux fois la dimension (1) des lames dans la direction de la couronne.

9. Dispositif selon l'une des revendications 6 à 8, caractérisé en ce que la lame réceptrice ($L_1$) est disposée en sorte que son plan moyen se trouve dans le plan bissecteur du dièdre formé par les plans moyens de deux lames motrices ($L_2,L_3$).

10. Dispositif selon la revendication 9, caractérisé en ce que ledit dièdre forme un angle compris entre 40 et 140°.

11. Dispositif selon la revendication 9 ou 10, caractérisé en ce que le matériau piézoélectrique est du quartz et l'angle du dièdre est de 120°, les trois lames étant perpendiculaires à chacun des trois axes électriques du quartz.

12. Dispositif selon l'une des revendications 6 à 11, caractérisé en ce qu'il comporte des moyens pour appliquer aux grandes faces des lames motrices des tensions sinusoïdales (U,-U) de signes opposés mais de même fréquence.

13. Dispositif selon la revendication 12, caractérisé en ce qu'il comporte des moyens pour introduire une différence de tension (u) entre les tensions appliquées aux lames motrices.

14. Dispositif selon l'une des revendications 6 à 13, caractérisé en ce que ledit noyau (M) est de forme cylindrique.

15. Dispositif selon l'une des revendications 6 à 14, caractérisé en ce que ladite couronne (2), ledit noyau (M) et lesdites lames ($L_1,L_2,L_3$) sont faites d'un même matériau piézoélectrique.

16. Dispositif selon la revendication 15, caractérisé en ce que ladite couronne, ledit noyau et lesdites lames sont obtenus par façonnage d'une masse monolithique en matériau piézoélectrique.

17. Dispositif selon l'une des revendications 6 à 16, caractérisé en ce que ladite couronne (2) est fixée à un boîtier (B) solidaire du mobile.

18. Dispositif selon la revendication 17, caractérisé en ce que ladite couronne (2) est frettée dans le boîtier (B).

19. Dispositif selon la revendication 17 ou 18, caractérisé en ce que ledit boîtier (B) est rempli d'un gaz plus ou moins lourd que l'air.

20. Dispositif selon la revendication 19, caractérisé en ce que ledit boîtier est en un matériau de même dilatation thermique que le matériau de la couronne.

21. Dispositif selon l'une des revendications 6 à 20, caractérisé en ce que les faces supérieure et inférieure du noyau sont partiellement métallisées et que des moyens sont prévus pour les mettre en présence d'un champ magnétique réglable.

22. Application d'un dispositif selon l'une des revendications 6 à 21 comme gyromètre.

23. Application d'un dispositif selon l'une des revendications 6 à 21 comme accéléromètre, le dispositif comportant alors des moyens pour déterminer les tensions continues apparaissant entre les grandes faces des lames sous l'effet de l'accélération, ces tensions étant représentatives des composantes de l'accélération selon deux directions perpendiculaires entre elles et orthogonales audit axe.

## Patentansprüche

1. Verfahren zum Bestimmen der Drehzahl eines Körpers um eine Achse, bei dem man an diesem Körper eine Einheit befestigt, die aus einem Ring besteht, der mit einem zentralen Kern durch eine Mehrzahl von radialen Rippen verbunden ist, die piezoelektrische Lamellen umfassen, und wobei der piezoelektrische Effekt verwendet wird, um eine Schwingung in der genannten Einheit zu induzieren und um eine der genannten Drehzahl entsprechende Spannung zu erhalten, dadurch gekennzeichnet, daß man die genannte Einheit an dem genannten Körper unter Zwischenschaltung des Ringes befestigt, daß man als Rippen Lamellen aus piezoelektrischem Material verwendet, deren Hauptflächen metallisiert sind und die derart angeordnet sind, daß ihre Mittelebenen sich auf der genannten Achse schneiden, und daß man diese metallisierten Flächen zum Anlegen einer elektrischen Spannung verwendet, um eine Translationsschwingung in dem mittleren Kern zu induzieren oder um eine elektrische Spannung aufzunehmen, die durch eine induzierte Schwingung in der Lamelle durch die Drehung des Körpers hervorgerufen wird.

2. Verfahren nach Anspruch 1, dadurch gekennzeichnet, daß man mindestens eine Lamelle ($L_1$), die sogenannte Empfangslamelle, und mindestens zwei Lamellen ($L_2$, $L_3$), sogenannte Antriebslamellen, verwendet, daß man elektrische Wechselspannungen an die Antriebslamellen anlegt, um sie in Schwingung zu versetzen und daß man an der Empfangslamelle eine Spannung ($u_1$) aufnimmt, die der longitudinalen Schwingung dieser Lamelle proportional ist.

3. Verfahren nach Anspruch 2, dadurch gekennzeichnet, daß man zwei Antriebslamellen verwendet, die derart angeordnet sind, daß ihre Mittelebenen einen V-Winkel in der Halbierungsebene bilden, in welcher sich die Mittelebene der Empfangslamelle befindet, und daß man an diese beiden Antriebslamellen Sinusspannungen (U, -U) entgegengesetzter Richtung, aber gleicher Frequenz anlegt.

4. Verfahren nach Anspruch 3, dadurch gekennzeichnet, daß man eine Spannungsdifferenz (u) zwischen den Spannungen einführt, die an die Antriebslamellen angelegt werden, um eine Schwingungskomponente zu erhalten, die in die Richtung der Empfangslamelle gerichtet ist.

5. Verfahren nach einem der Ansprüche 2 bis 4, dadurch gekennzeichnet, daß man die Frequenz der elektrischen Erregung derart steuert, daß sie möglichst der Eigenfrequenz der Schwingungen des genannten Kerns (M) in der Richtung der Empfangslamelle ($L_1$) angenähert ist.

6. Vorrichtung zum Bestimmen der Drehzahl eines Körpers um eine Achse, bestehend aus einer Einheit, die an dem Körper befestigt ist und durch einen Drehring gebildet ist, der mit einem mittleren Kern durch eine Mehrzahl von radialen Rippen verbunden ist, die mit piezoelektrischen Lamellen versehen sind, und aus Mitteln, durch die diese Lamellen durch den piezoelektrischen Effekt in Schwingung zu versetzen sind und um durch den piezoelektrischen Effekt eine Spannung aufgrund einer in den Rippen induzierten Schwingung zu empfangen, dadurch gekennzeichnet, daß der genannte Ring (2) an dem Körper (B) derart befestigt ist, daß die Achse des Ringes parallel zu der genannten Achse (z'z) gerichtet ist, der genannte Kern (M) in dem Ring derart angeordnet ist, daß sein Schwerpunkt sich auf der genannten Achse befindet, und daß die Vorrichtung mindestens eine Rippe, die durch eine Lamelle ($L_1$) (Empfangslamelle) aus piezoelektrischem Material gebildet wird, und mindestens zwei weitere Rippen umfaßt, von denen jede durch eine Lamelle ($L_2$, $L_3$) (Antriebslamellen) aus piezoelektrischem Material gebildet wird, wobei die drei Lamellen metallisierte Hauptflächen aufweisen und derart angeordnet sind, daß ihre Mittelebenen sich auf der genannten Achse schneiden, wobei Mittel, um an die metallisierten Flächen der Antriebslamellen elektrische Spannungen derart anzulegen, daß durch den piezoelektrischen Effekt eine Translationsschwingung in dem Kern induziert wird, und Mittel vorgesehen sind, um die elektrische Spannung ($u_1$) aufzunehmen, die durch den piezoelektrischen Effekt auf den metallisierten Hauptflächen der Empfangslamelle durch die induzierte Schwingung in dieser Lamelle aufgrund der Drehung des Körpers hervorgerufen wird.

7. Vorrichtung nach Anspruch 6, dadurch gekennzeichnet, daß die Antriebslamellen ($L_2$, $L_3$) identisch sind und die Empfangslamelle ($L_1$) mit den Antriebslamellen identisch oder gegenüber diesen unterschiedlich ausgebildet ist.

8. Vorrichtung nach Anspruch 6 oder 7, dadurch gekennzeichnet, daß die Abmessung (h) der Lamellen in der zu der genannten Achse parallelen Richtung mindestens dem zweifachen der Abmessung (1) der Lamellen in der Richtung des Ringes entspricht.

9. Vorrichtung nach einem der Ansprüche 6 bis 8, dadurch gekennzeichnet, daß die Empfangslamelle ($L_1$) derart angeordnet ist, daß ihre Mittelebene sich in der Halbierungsebene des V-Winkels befindet, der durch die Mittelebenen der beiden Antriebslamellen ($L_2$, $L_3$) gebildet ist.

10. Vorrichtung nach Anspruch 9, dadurch gekennzeichnet, daß der genannte V-Winkel einen Winkel zwischen 40° und 140° umfaßt.

**11.** Vorrichtung nach Anspruch 9 oder 10, dadurch gekennzeichnet, daß das piezoelektrische Material Quarz ist und daß der Winkel des V-Winkels 120° ist, wobei die drei Lamellen senkrecht zu jeder der drei elektrischen Achsen des Quarzes stehen.

**12.** Vorrichtung nach einem der Ansprüche 6 bis 11, dadurch gekennzeichnet, daß sie Mittel zum Anlegen von Sinusspannungen (U,-U) entgegengesetzer Richtung, jedoch gleicher Frequenz an die Hauptflächen der Antriebslamellen umfaßt.

**13.** Vorrichtung nach Anspruch 12, dadurch gekennzeichnet, daß sie Mittel umfaßt, um eine Spannungsdifferenz (u) zwischen den an den Antriebslamellen angelegten Spannungen einzuführen.

**14.** Vorrichtung nach einem der Ansprüche 6 bis 13, dadurch gekennzeichnet, daß der genannte Kern (M) zylindrisch geformt ist.

**15.** Vorrichtung nach einem der Ansprüche 6 bis 14, dadurch gekennzeichnet, daß der genannte Ring (2), der genannte Kern (M) und die genannten Lamellen ($L_1$, $L_2$, $L_3$) aus dem gleichen piezoelektrischen Material hergestellt sind.

**16.** Vorrichtung nach Anspruch 15, dadurch gekennzeichnet, daß der genannte Ring, der genannte Kern und die genannten Lamellen durch Formen einer monolithischen Masse aus piezoelektrischem Material erhalten sind.

**17.** Vorrichtung nach einem der Ansprüche 6 bis 16, dadurch gekennzeichnet, daß der genannte Ring (2) an einem festen Gehäuse (B) des Körpers befestigt ist.

**18.** Vorrichtung nach Anspruch 17, dadurch gekennzeichnet, daß der genannte Ring (2) in das Gehäuse (B) eingeschrumpft ist.

**19.** Vorrichtung nach Anspruch 17 oder 18, dadurch gekennzeichnet, daß das genannte Gehäuse (B) mit einem Gas gefüllt ist, daß mehr oder weniger schwer als Luft ist.

**20.** Vorrichtung nach Anspruch 19, dadurch gekennzeichnet, daß das genannte Gehäuse aus einem Material besteht, dessen Wärmeausdehnungskoeffizient demjenigen des Materials des Ringes entspricht.

**21.** Vorrichtung nach einem der Ansprüche 6 bis 20, dadurch gekennzeichnet, daß die oberen und unteren Flächen des Kerns teilweise metallisiert sind und, daß Mittel vorgesehen sind, um sie der Einwirkung eines regelbaren Magnetfeldes zu unterwerfen.

**22.** Verwendung einer Vorrichtung gemäß einem der Ansprüche 6 bis 21 als Gyrometer.

**23.** Verwendung einer Vorrichtung gemäß einem der Ansprüche 6 bis 21 als Beschleunigungsmesser, wobei die Vorrichtung dann Mittel zum Bestimmen der Gleichspannungen enthält, die zwischen den Hauptflächen der Lamellen unter der Beschleunigungswirkung auftreten, wobei diese Spannungen den Beschleunigungskomponenten in den beiden senkrechten Richtungen entsprechen, zu denen die genannte Achse orthogonal ist.

## Claims

**1.** Method for determining the speed of rotation of a movable member about an axis, in which an assembly comprising a ring connected to a central core by a plurality of radial arms including piezoelectric plates is fixed to this movable member, and the piezoelectric effect is used to induce a vibration in the said assembly and to collect a voltage representative of the said speed of rotation, characterized in that the said assembly is fixed to the said movable member by means of the ring, and in that plates made of piezoelectric material are used as arms, the large faces of which plates are metallized and are arranged so that their mid-planes intersect on the said axis, and in that these metallized faces are used to apply an electrical voltage so as to induce a translational vibration in the central core or to collect an electrical voltage produced by a vibration induced in the plate by the rotation of the movable member.

2.  Method according to Claim 1, characterized in that at least one plate ($L_1$) called the receiving plate and at least two plates ($L_2$, $L_3$) called the driving plates are used, in that alternating electrical voltages are applied to the driving plates in order to cause them to vibrate and in that a voltage ($u_1$) is collected on the receiving plate, proportional to the longitudinal vibration of this plate.

3.  Method according to Claim 2, characterized in that two driving plates are used, arranged so that their mid-planes form a dihedron in the bisecting plane of which the mid-plane of the receiving plate lies and sinusoidal voltages (U,-U) of opposite signs but of the same frequency are applied to these two driving plates.

4.  Method according to Claim 3, characterized in that a voltage difference (u) is introduced between the voltages applied to the driving plates in order to obtain a vibration component directed in the direction of the receiving plate.

5.  Method according to one of Claims 2 to 4, characterized in that the frequency of the electrical excitation is adjusted so that it is as close as possible to the natural frequency of the vibrations of the said core (M) in the direction of the receiving plate ($L_1$).

6.  Device for determining the speed of rotation of a movable member about an axis, which comprises an assembly fixed to the movable member and constituted by an axisymmetric ring connected to a central core by a plurality of radial arms equipped with piezoelectric plates, means for causing these plates to vibrate by piezoelectric effect and for collecting, by piezoelectric effect, a voltage due to a vibration induced in the arms, characterized in that the said ring (2) is fixed to the movable member (B) so that the said ring has its axis parallel to the said axis (z'z), in that the said core (M) is placed in the ring so that its centre of mass lies on the said axis and in that the device comprises at least one arm constituted by a plate ($L_1$) (called receiving plate) made of piezoelectric material and at least two other arms each constituted by a plate ($L_2$, $L_3$) (called driving plate) made of piezoelectric material, these three plates having their large faces metallized and being arranged so that their mid-planes intersect on the said axis, means being provided for applying electrical voltages to the metallized faces of the driving plates so as to induce, by piezoelectric effect, a translational vibration in the core and means being provided to collect the electrical voltage ($u_1$) produced by piezoelectric effect on the metallized large faces of the receiving plate by the vibration induced in this plate by the rotation of the movable member.

7.  Device according to Claim 6, characterized in that the driving plates ($L_2$,$L_3$) are identical, the receiving plate ($L_1$) being identical to the driving plates or different therefrom.

8.  Device according to Claim 6 or 7, characterized in that the dimension (h) of the plates parallel to the said axis is at least twice the dimension (1) of the plates in the direction of the ring.

9.  Device according to one of Claims 6 to 8, characterized in that the receiving plate ($L_1$) is arranged so that its mid-plane lies in the bisecting plane of the dihedron formed by the mid-planes of two driving plates ($L_2$,$L_3$).

10. Device according to Claim 9, characterized in that the said dihedron forms an angle lying between 40 and 140°.

11. Device according to Claim 9 or 10, characterized in that the piezoelectric material is quartz and the angle of the dihedron is 120°, the three plates being perpendicular to each of the three electrical axes of the quartz.

12. Device according to one of Claims 6 to 11, characterized in that it includes means for applying sinusoidal voltages (U,-U), of opposite signs but of the same frequency, to the large faces of the driving plates.

13. Device according to Claim 12, characterized in that it includes means for introducing a voltage difference (u) between the voltages applied to the driving plates.

14. Device according to one of Claims 6 to 13, characterized in that the said core (M) has a cylindrical shape.

15. Device according to one of Claims 6 to 14, characterized in that the said ring (2), the said core (M) and the said plates ($L_1$,$L_2$,$L_3$) are made from the same piezoelectric material.

16. Device according to Claim 15, characterized in that the said ring, the said core and the said plates are obtained by forming a monolithic mass made of piezoelectric material.

17. Device according to one of Claims 6 to 16, characterized in that the said ring (2) is fixed to a housing (B) integral with the movable member.

18. Device according to Claim 17, characterized in that the said ring (2) is shrunk-fit into the housing (B).

19. Device according to Claim 17 or 18, characterized in that the said housing (B) is filled with a gas which is heavier or lighter than air.

20. Device according to Claim 19, characterized in that the said housing is made of a material having the same thermal expansion as the material of the ring.

21. Device according to one of Claims 6 to 20, characterized in that the upper and lower faces of the core are partially metallized and that means are provided for bringing them into the presence of an adjustable magnetic field.

22. Application of a device according to one of Claims 6 to 21 as a rate gyro.

23. Application of a device according to one of Claims 6 to 21 as an accelerometer, the device then including means for determining the DC voltages appearing between the large faces of the plates under the effect of the acceleration, these voltages being representative of the components of the acceleration in two mutually perpendicular directions orthogonal to the said axis.

FIG.1

FIG.2

FIG.3

FIG.4